# EUROPEAN PATENT APPLICATION

(11) **EP 1 942 568 A1**
(43) Date of publication of application: **09.07.2008**
(21) Application number: 07000122.7
(22) Date of filing: 04.01.2007
(51) Int. Cl.: H02J 7/00

(54) **Charging circuit for balancing charging serially connected batteries**

(71) Applicant: AENEAS ENERGY TECHNOLOGY CO., LTD., Nei-Hu Taipei (TW)
(72) Inventor: Hsu, Deng Shien, Taipei (TW); Yu, Zong-Long, Shanghai City (CN); Tsai, Wen-Ping, Datong District Taipei City 103 (TW)
(74) Representative: Liesegang, Eva

(57) **Abstract**

A charging circuit includes a battery pack having a plurality of serially connected batteries and being connected to a power supply; a changeover switch being serially connected to and between any two adjacent batteries; and a precision voltage detector being parallelly connected to each of the batteries for independently detecting a voltage of the connected battery and sending out a detected result to a charging control circuit for controlling the ON/OFF of the changeover switch corresponding to the battery. When a battery is detected by a corresponding precision voltage detector as having been fully charged, the corresponding charging control circuit sets the changeover switch corresponding to the battery to OFF to stop charging the battery. The remaining batteries that are subsequently fully charged are disconnected from the power source one by one until all the batteries in the battery pack have been fully charged. Thus, all the batteries are balance-charged.

## Description

### FIELD OF THE INVENTION

The present invention relates to a charging circuit for balance charging serially connected batteries, and more particularly to a charging circuit that is designed for charging a plurality of serially connected batteries while the batteries being charged are independently detected and controlled by a charging control circuit.

### BACKGROUND OF THE INVENTION

With the quickly increased demands for all kinds of portable electronic products, such as digital camera, personal digital assistant (PDA), MP3, etc., there are also increasing demands for high-capacity rechargeable batteries that can be fully charged within a largely shortened time with a compact and lightweight charger that has low manufacturing cost and long service life.

While the currently available chargers have different advantages and disadvantages, most of them fail to meet the above-mentioned requirements of being compact, lightweight, economical, and durable. Therefore, it is still desirable to improve the conventional chargers.

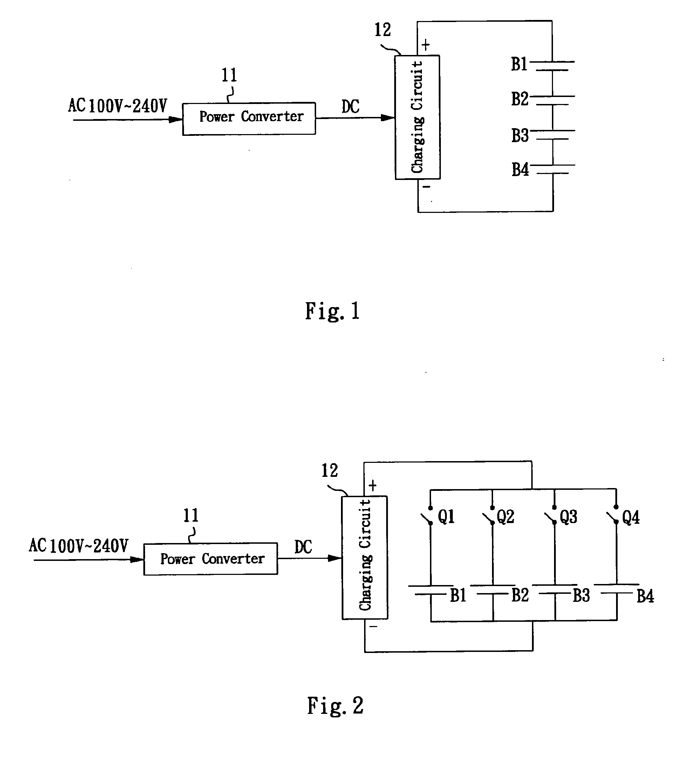

Fig. 1 shows a charging circuit 12 for a conventional serial charger. As shown, an alternating current (AC) of 100V-240V is converted by a power converter 11 into a direct current (DC) charging voltage, which is used to charge a plurality of serially connected batteries B1, B2, B3, B4 via the charging circuit 12. While the above-described conventional serial charger has simple structure and low price, it does not ensure all the serially connected batteries are balance-charged. In other words, it is possible some of the serially connected batteries are fully charged while others are not. As a result, some of the batteries might be excessively charged to cause dangers, while others are still not fully charged when the charging stops; or, some of the batteries would become deteriorated and have reduced service life due to being repeatedly recharged or discharged.

Fig. 2 shows a charging circuit 12 for a conventional parallel charger. As shown, a plurality of parallelly connected batteries B1, B2, B3, B4 are charged via the charging circuit 12. With the parallel charger, the parallelly connected batteries have similar charging voltage without the risk of being excessively charged. However, the parallel charger fails to meet the requirement of quick charging. Moreover, it is uneasy to select and arrange suitable electronic control elements for the parallel charger. For instance, when the charging voltage is 3.7V, and each of the parallelly connected batteries has a charging current of 1. 5A, total 6 amperes of charging current is required. And, since voltage difference is existed among different transistors included in the charging circuit of the parallel charger, there are many difficulties to be overcome before a low-voltage high-current charging circuit can be formed. For example, since the wiring on the circuit board of the parallel charger must not be less than 6mm to meet relevant safety code, the parallel charger usually has a large volume and the components thereof tend to produce high amount of heat. Moreover, it is uneasy to achieve the effect of high-volume quick charging with the parallel charger. Therefore, the conventional parallel charger no longer meets the market demands now. When it is desired to increase the charging voltage to thereby enhance the power and reduce the current of the parallel charger, the voltage differences among the switch transistors Q1, Q2, Q3, Q4 included in the charging circuit 12 would cause the tough problem of high temperature. In the event heat radiation elements are added in an attempt to radiate heat produced by the transistors, the parallel charger would have excessively large volume and largely increased manufacturing cost.

It is therefore tried by the inventor to develop a novel charging circuit for balance charging a plurality of serially connected batteries, so as to eliminate the drawbacks existed in the conventional serial and parallel chargers.

### SUMMARY OF THE INVENTION

A primary object of the present invention is to provide a compact and lightweight charging circuit that allows a plurality of serially connected batteries having different levels of remaining power to be independently fully charged in a quick and safe manner.

To achieve the above and other objects, the charging circuit for balance charging serially connected batteries according to a preferred embodiment of the present invention includes a battery pack consisting of a plurality of serially connected batteries and being connected to a power supply, from which a constant charge current source is supplied to the batteries; a changeover switch being serially connected to and between any two adjacent batteries, wherein the changeover switches may be connected to positive or negative electrodes of the batteries without particular limit; and a precision voltage detector being parallelly connected to each battery for detecting a voltage of the connected battery and sending out a detected result to a charging control circuit for the latter to control the ON/OFF of a corresponding changeover switch connected thereto. When the charging circuit is in use, the changeover switches are respectively set by their corresponding charging control circuits to ON, so that the constant charge current source is supplied from the power supply to each of the batteries to charge the same. And, when the voltage of a battery in the battery pack is detected by the corresponding precision voltage detector as having been fully charged, the changeover switch corresponding to that fully charged battery is set to OFF by the corresponding charging control circuit, so that the charge current source is not supplied to the fully charged battery, but is supplied to a following battery via a by-pass circuit parallelly connected to the fully charged battery. The remaining batteries in the battery pack are independently disconnected from the power supply one by one when they are fully charged, until the last battery is fully charged.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein
Fig. 1 is a schematic circuit diagram of a conventional serial charger;
Fig. 2 is a schematic circuit diagram of a conventional parallel charger;
Fig. 3 is a schematic circuit diagram of a charging circuit for balance charging serially connected batteries according to a first embodiment of the present invention;
Fig. 4 is a schematic circuit diagram of a charging circuit for balance charging serially connected batteries according to a second embodiment of the present invention; and
Fig. 5 schematically shows a potential offset circuit included in a charging control circuit of the charging circuit of the present invention.

### DETAILED DESCRIPTION OF THE PREFERRED EMBODIMENTS

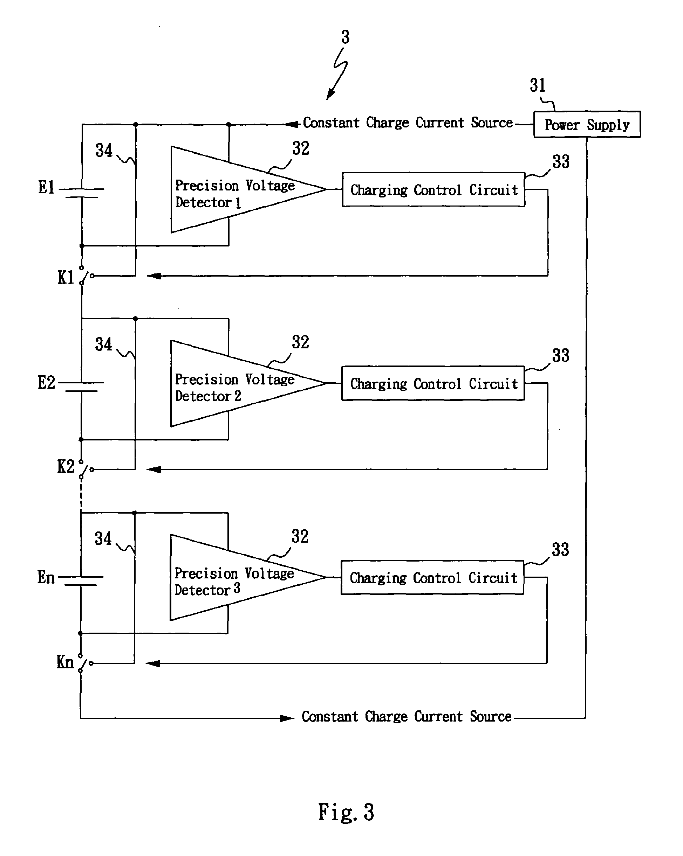

Please refer to Fig. 3 that is a schematic circuit diagram of a charging circuit 3 for balance charging serially connected batteries according to a first preferred embodiment of the present invention. As shown, the charging circuit 3 includes a battery pack consisting of a plurality of serially connected batteries E1, E2, En, and being connected to a power supply 31, from which a constant charge current source is supplied to the battery pack. A changeover switch K1, K2, Kn is serially connected to and between any two adjacent batteries. It is noted the changeover switches K1, K2, Kn may be connected to positive or negative electrodes of the batteries without particular limit. And, each of the batteries E1, E2, En is connected to a precision voltage detector 32 in parallel, so that the precision voltage detector 32 may detect a voltage of the battery parallelly connected thereto and send a detected result to a charging control circuit 33. The charging control circuits 33 are independently connected to the changeover switches K1, K2, Kn for controlling the ON/OFF of the corresponding changeover switches K1, K2, Kn based on the detected results from corresponding precision voltage detectors 32.

When the charging circuit 3 according to the first embodiment of the present invention is in use, the charging control circuits 33 control and set the corresponding changeover switches K1, K2, Kn to ON, so that the constant charge current source from the power supply 31 is supplied to all the batteries E1, E2, En to charge the same. When any of the batteries E1, E2, En is detected by the precision voltage detector 32 parallelly connected thereto as having been fully charged, a message is immediately sent by the precision voltage detector 32 to inform the corresponding charging control circuit 33 of the fully charged battery, so that the charging control circuit 33 controls and sets the changeover switch K1, K2, or Kn connected thereto to OFF. At this point, the charge current source to the fully charged battery is supplied to a following battery via a by-pass circuit 34 parallelly connected to the fully charged battery. That is, the fully charged battery is not further charged. In this manner, other batteries that are subsequently fully charged are disconnected from the power supply one by one until all the batteries in the battery pack have been fully charged.

With the above arrangements, a plurality of serially connected batteries E1, E2, En may be independently detected and controlled by a corresponding charging control circuit 33 to stop charging when they are fully charged. That is, the charging circuit of the present invention is an intelligent charging circuit allowing the serially connected batteries to be independently charged.

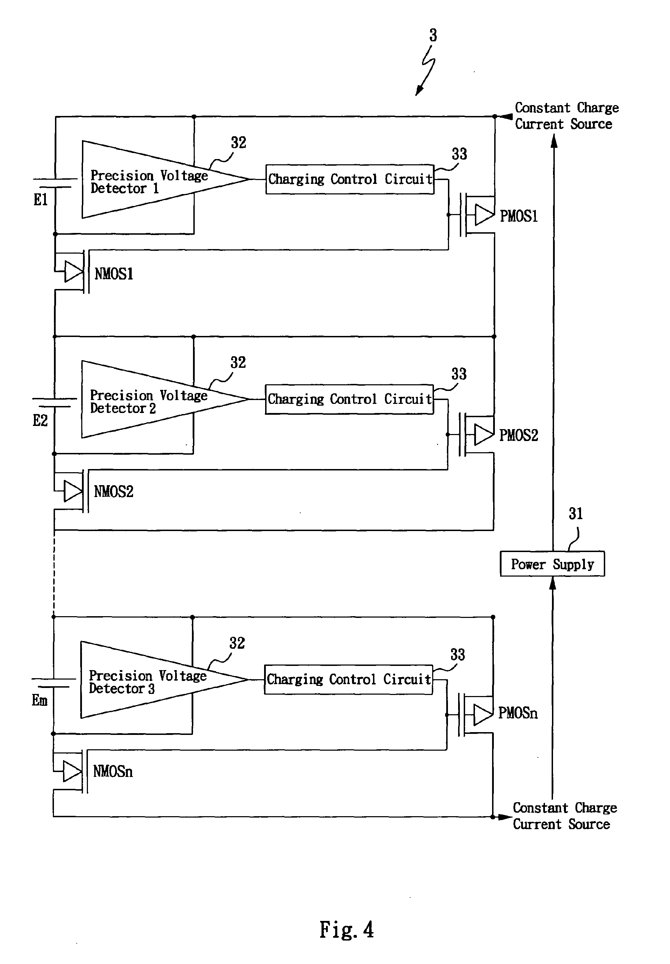

Please refer to Fig. 4 that is a schematic circuit diagram of a charging circuit for balance charging serially connected batteries according to a second embodiment of the present invention. The changeover switches K1, K2, Kn in the first embodiment are replaced by P/N type metal oxide semiconductors (MOS's) in the second embodiment. More specifically, an N-type metal oxide semiconductor NMOS1, NMOS2, NMOSn is provided between any two adjacent batteries E1, E2, En, and each of the charging control circuits 33 has a P-type metal oxide semiconductor PMOS1, PMOS2, PMOSn parallelly connected thereto. Wherein, each of the N-type MOS's is connected at a source to a preceding battery, at a drain to a following battery, and at a gate to an output of the corresponding charging control circuit 33; and each of the P-type MOS's is connected at a gate to the output of the corresponding charging control circuit 33, at a source to a positive electrode of the corresponding battery, and at a drain to the drain of the corresponding N-type MOS.

When the charging circuit 3 according to the second embodiment of the present invention is in use, the charging control circuits 33 control and set the corresponding N-type metal oxide semiconductors NMOS1, NMOS2, NMOSn to ON, and the corresponding P-type metal oxide semiconductors PMOS1, PMOS2, PMOSn to OFF, so that all the batteries E1, E2, En in the battery pack are charged by the constant charge current source supplied thereto from the power supply 31. When any one of the batteries E1, E2, En is detected by the precision voltage detector 32 parallelly connected thereto as having been fully charged, a message is immediately sent by the precision voltage detector 32 to inform the corresponding charging control circuit 33 of the fully charged battery, so that the charging control circuit 33 controls and sets the N-type MOS corresponding to that fully charged battery to OFF, and the corresponding P-type MOS to ON. At this point, the charge current source to the fully charged battery is supplied to a following battery via the P-type MOS connected to the charging control circuit 33 of the fully charged battery. That is, the fully charged battery is not further charged. In this manner, other batteries that are subsequently fully charged are disconnected from the power supply one by one until all the batteries in the battery pack have been fully charged.

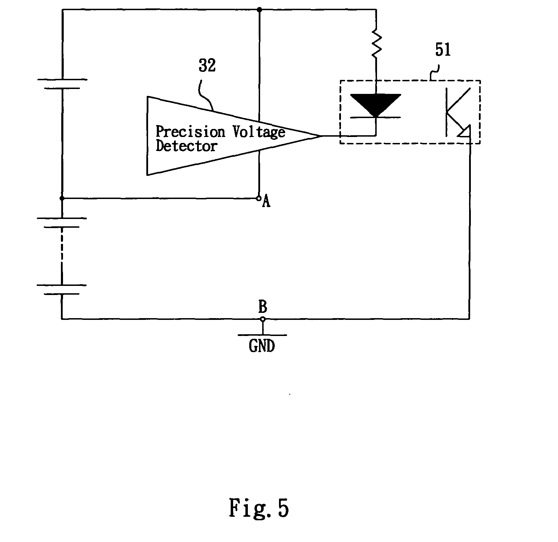

In the present invention, the charging control circuit 33 includes a potential offset circuit, a reset, a locker, and a switch driver. Please refer to Fig. 5. The potential offset circuit may be a photoelectric coupler 51. With the primary and the secondary insulation property of the photoelectric coupler 51, it is possible to realize the potential offset of different grounding reference signals. When a signal input to the precision voltage detector 32 has a reference point A, and a subsequently received electric input has an input reference point B, the photoelectric coupler 51 enables the realization of the transition of the signal of the precision voltage detector 32 from the reference point A to the reference point B. This is referred to as potential offset.

The locker and the switch driver may consist of a microcontroller (MCU) and related software. When a potential offset output signal enters the microcontroller, the microcontroller detects the signal and outputs a corresponding control signal to drive the external changeover switches K1, K2, Kn to switch. Once the output signal from the microcontroller is effective, it is no longer controlled by the precision voltage detector 32 but by a reset signal from the external power supply. When a reset signal reaches, the originally locked signal is reset. Similarly, the signal output by the microcontroller may have a potential offset to any other reference potential via other photoelectric couplers.

In the above illustrated embodiments, the batteries E1, E2, En maybe high-capacity capacitors or Li-ion batteries. The charging circuit of the present invention has a wide range of applications, including charging battery packs for notebook computers; charging battery packs for Li-ion battery powered electric bicycles, electric motorcycles, electric tools, electric vessels, golf carts, and solar lighting fixture; charging battery packs for electric vehicles using combined power from pure Li-ion/Li-ion batteries and traditional engines; charging Li-ion battery packs for ignition of general automobiles; and charging battery packs having a plurality of serially connected Li-ion batteries.

## Claims

1. A charging circuit for balance charging serially connected batteries, comprising:
a battery pack including a plurality of serially connected batteries, and being connected to a power supply, so that a constant charge current source is supplied by the power supply to the battery pack;
a plurality of changeover switches, each of which is serially connected to and between two adjacent ones of the batteries, wherein the changeover switches may be connected to positive or negative electrodes of the batteries without particular limit; and
a plurality of precision voltage detectors, each of which is parallelly connected to one of the batteries for independently detecting a voltage of the battery parallelly connected thereto and sending out a detected result to a charging control circuit; and the charging control circuits being independently connected to the changeover switches for controlling the changeover switches to ON or OFF based on the detected results sent from corresponding precision voltage detectors;
whereby when the serially connected batteries are charged, the changeover switches are independently controlled by the charging control circuits connected thereto to ON, so that the constant charge current source from the power supply is supplied to the batteries to charge the same; and when any of the batteries is detected by the precision voltage detector parallelly connected thereto as having been fully charged, a message is sent by the precision voltage detector to inform the corresponding charging control circuit of the fully charged battery, causing the charging control circuit to control the corresponding changeover switch to OFF, so that the charge current source to the fully charged battery is supplied to a following battery via a by-pass circuit parallelly connected to the fully charged battery, and the fully charged battery is not further charged; and the remaining batteries that are subsequently fully charged are disconnected from the power supply one by one until all the batteries in the battery pack have been fully charged.

2. A charging circuit for balance charging serially connected batteries, comprising:
a battery pack including a plurality of serially connected batteries, and being connected to a power supply, so that a constant charge current source is supplied by the power supply to the battery pack;
a plurality of N-type metal oxide semiconductors, each of which is provided between two adjacent ones of the serially connected batteries;
a plurality of precision voltage detectors, each of which is parallelly connected to one of the batteries for independently detecting a voltage of the battery parallelly connected thereto and sending out a detected result to a charging control circuit; and the charging control circuits being independently connected to the changeover switches for controlling the changeover switches to ON or OFF based on the detected results sent from corresponding precision voltage detectors; and
a plurality of P-type metal oxide semiconductors, each of which is parallelly connected to one of the charging control circuits;
wherein each of the N-type metal oxide semiconductors is connected at a source to a preceding battery, at a drain to a following battery, and at a gate to an output of the corresponding charging control circuit; and each of the P-type metal oxide semiconductors is connected at a gate to the output of the corresponding charging control circuit, at a source to a positive electrode of the corresponding battery, and at a drain to the drain of the corresponding N-type metal oxide semiconductor;
whereby when the serially connected batteries are charged, the charging control circuits independently control the corresponding N-type metal oxide semiconductors to ON, and the corresponding P-type metal oxide semiconductors to OFF, so that the constant charge current source from the power supply is supplied to each of the batteries to charge the same; and when any of the batteries is detected by the precision voltage detector parallelly connected thereto as having been fully charged, the precision voltage detector sends out a message to inform the corresponding charging control circuit of the fully charged battery, causing the charging control circuit to control the N-type metal oxide semiconductor corresponding to the fully charged battery to OFF, and the corresponding P-type metal oxide semiconductor to ON, so that the charge current source to the fully charged battery is supplied to a following battery via the P-type metal oxide semiconductor connected to the charging control circuit of the fully charged battery, and the fully charged battery is not further charged; and the remaining batteries that are subsequently fully charged are disconnected from the power supply one by one until all the batteries in the battery pack have been fully charged.

3. The charging circuit for balance charging serially connected batteries as claimed in claim 1, wherein the batteries are selected from the group consisting of high-capacity capacitors and Li-ion batteries.

4. The charging circuit for balance charging serially connected batteries as claimed in claim 2, wherein the batteries are selected from the group consisting of high-capacity capacitors and Li-ion batteries.
